# EUROPÄISCHE PATENTSCHRIFT

(11) **EP 0 941 256 B1**
(45) Veröffentlichungstag und Bekanntmachung des Hinweises auf die Patenterteilung: **24.01.2001**
(21) Anmeldenummer: 97950168.1
(22) Anmeldetag: 11.11.1997
(51) Int. Cl.: C08F 4/48

(54) **VERFAHREN ZUR HERSTELLUNG VON POLYALKYL(METH)ACRYLATEN**
METHOD FOR PREPARING POLYACRYL(METH)ACRYLATES
PROCEDE DE PREPARATION DE POLYACRYL(METH)ACRYLATES

(30) Priorität: 23.11.1996 DE 19648565
(43) Veröffentlichungstag der Anmeldung: 15.09.1999
(73) Patentinhaber: BASF AKTIENGESELLSCHAFT, 67056 Ludwigshafen (DE)
(72) Erfinder: JÜNGLING, Stephan, D-68165 Mannheim (DE); MEHLER, Christof, D-67061 Ludwigshafen (DE); WEISS, Horst, D-76139 Karlsruhe (DE); STEIGER, Susanne, D-67354 Römerberg (DE); MÜLLER, Axel, D-65193 Wiesbaden (DE); SCHLAAD, Helmut, D-55545 Bad Kreuznach (DE); SCHMITT, Bardo, D-55120 Mainz (DE)
(86) Internationale Anmeldenummer: EP9706275
(87) Internationale Veröffentlichungsnummer: WO9823651

(56) Entgegenhaltungen:
- EP-A- 0 686 647
- DE-A- 19 530 398
- US-A- 4 224 429

## Beschreibung

Die vorliegende Erfindung betrifft ein Verfahren zur Herstellung von Homo-, Co- oder Blockcopolymeren durch anionische Polymerisation von Acrylaten und/oder Methacrylaten in Gegenwart einer Initiatorzusammensetzung enthaltend
A) eine alkaliorganische Verbindung,
B) eine organische Aluminiumverbindung und
C) einen das Alkalikation komplexierenden Zusatz, ausgewählt aus der Gruppe offenkettiger Ether mit mindestens zwei Sauerstoffatomen in Etherfunktion, makrozyklischer Ether oder Kryptanden, oder aus der Gruppe von quartären Kationen der allgemeinen Formel I 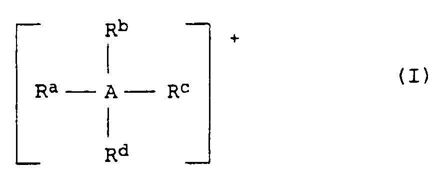 in der
   A N, P, As, Sb, und
   R^{a}, R^{b}, R^{c}, R^{d}
   unabhängig voneinander gegebenenfalls substituiertes Alkyl, Cycloalkyl, Aralkyl oder Aryl bedeuten, wobei zwei benachbarte Reste zusammen mit dem Heteroatom A einen 5 oder 6-gliedrigen Heterozyclus bilden können, der ein oder zwei weitere Heteroatome, ausgewählt aus Stickstoff-, Sauerstoff- oder Schwefelatomen, enthalten kann.

Darüberhinaus betrifft die vorliegende Erfindung die Initiatorzusammensetzung sowie ein Verfahren zur Herstellung der Initiatorzusammensetzung und deren Verwendung.

Die anionische und koordinative Polymerisation von (Meth)acrylsäureestern gestaltet sich aufgrund der mit der Carbonylgruppe verbundenen Nebenreaktionen wie Übertragungs- und Kettenabbruchsreaktionen schwierig, insbesondere hinsichtlich der Kontrolle von Molekulargewicht, Molekulargewichtsverteilung und Stereoregularität. Verschiedene Möglichkeiten zur kontrollierten Polymerisation von (Meth)acrylsäureestern wurden in J.M.S. - Rev. Makromol. Chem. Phys. C34(2), 243 - 324 (1994) mit ihren Vor- und Nachteilen zusammenfassend diskutiert.

So wird beispielsweise in EP-B-0 274 318 die anionische Polymerisation von Acrylatmonomeren mit einem Alkali- oder Erdalkalialkyl als Initiator in Gegenwart von makrozyklischen Komplexbildnern beschrieben. Das Verfahren wird in Tetrahydrofuran bei Temperaturen von - 78°C durchgeführt. Des weiteren wurden auch LiCl bzw. Lithiumalkoholate als komplexierende Zusätze eingesetzt. Eine enge Molekulargewichtsverteilung wird aber nur bei tiefen Temperaturen erreicht, was lange Polymerisationszeiten und technisch aufwendige und teuere Apparaturen verursacht. Außerdem müssen bei der Verwendung von Tetrahydrofuran als Lösungsmittel aufgrund der Peroxidbildung weitere Sicherheitsvorkehrungen getroffen werden.

In Macromolecules 25 (1992), S 4457 - 4463, wird die Polymerisation von Methylmethacrylat in Toluol mit Diphenylmethylnatrium als Initiator in Gegenwart von makrozyklischen Kronenethern beschrieben. Das erhaltene Polymethylmethacrylat weist eine nur geringe Syndiotaktizität auf.

Aus der EP-A-0 434 316 ist die Polymerisation von Methacrylaten durch Alkalimetallalkyle in Gegenwart von organischen Aluminiumverbindungen mit sterisch anspruchsvollen Resten bekannt. Die Reaktionszeiten sind aber selbst bei höheren Temperaturen noch im Bereich von mehreren Stunden.

Ein weit verbreitetes Problem bei der anionischen Polymerisation von Acrylaten in Gegenwart von Alkyllithium und Aluminiumalkylverbindungen ist die Gelbildung. Sie entsteht vermutlich dadurch, daß mehrere Moleküle (Monomere oder schon gebildete Polymerketten) an das Metallzentrum koordinieren. Dieses Phänomen führt dazu, daß sich zum einen die Reaktionsmischung schlecht handhaben läßt, zum anderen die Molekulargewichtsverteilung der Polyalkylacrylate breit ist und häufig kein vollständiger Monomerenumsatz erreicht wird.

Eine metallfreie Initiierung durch Ammoniumsalze von resonanzstabilisierten Carbanionen ist aus EP-A-0 306 714 bekannt. Tetraalkylammoniumsalze neigen aber in Gegenwart von starken Basen, wie beispielsweise unkomplexierten Carbanionen zur Hoffmann-Eliminierung, was zu Kettenabbrüchen führt.

Aufgabe der vorliegenden Erfindung war es deshalb, eine neue Starterzusammensetzung zu entwickeln, die eine gute Kontrolle der Polymerisationsreaktion erlaubt. Insbesondere sollte ein Verfahren zur Verfügung gestellt werden, das auch bei höheren Temperaturen zu Produkten mit enger Molekulargewichtsverteilung führt. Ferner sollten möglichst quantitative Umsätze erreicht und Blockcopolymere hergestellt werden können. Außerdem sollte die Reaktionsgeschwindigkeit für technische Zwecke geeignet sein. Darüberhinaus war es die Aufgabe, ein Verfahren zu finden, das weitgehend unempfindlich gegen die in Monomeren und Lösungsmitteln technischer Qualität vorhandenen Verunreinigungen ist. Des weiteren sollte ein Verfahren entwickelt werden, bei dem die Gelbildung vermieden wird.

Demgemäß wurde ein Verfahren zur Herstellung von Homo-, Co- oder Blockcopolymeren durch anionische Polymerisation von Acrylaten und/oder Methacrylaten in Gegenwart einer Initiatorzusammensetzung enthaltend
A) eine alkaliorganische Verbindung,
B) eine organische Aluminiumverbindung und
C) einen das Alkalikation komplexierenden Zusatz, ausgewählt aus der Gruppe offenkettiger Ether mit mindestens zwei Sauerstoffatomen in Etherfunktion, makrocyclischer Ether oder Kryptanden, oder aus der Gruppe von quartären Kationen der allgemeinen Formel I 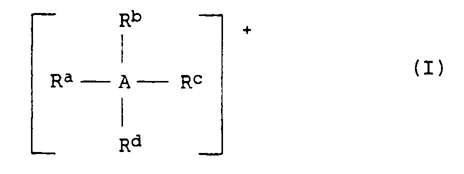 in der
   A N, P, As, Sb, und
   R^{a}, R^{b}, R^{c}, R^{d}
   unabhängig voneinander gegebenenfalls substituiertes Alkyl, Cycloalkyl, Aralkyl oder Aryl bedeuten, wobei zwei benachbarte Reste zusammen mit dem Heteroatom A einen 5 oder 6-gliedrigen Heterozyclus bilden können, der ein oder zwei weitere Heteroatome, ausgewählt aus Stickstoff-, Sauerstoff- oder Schwefelatomen, enthalten kann,
   gefunden.

Als Polyalkyl(meth)acrylate kommen sowohl Homopolymere als auch Copolymere oder Blockcopolymere in Betracht. Beispielsweise können aus Mischungen unterschiedlicher Alkylacrylate oder unterschiedlicher Alkylmethacrylate oder Mischungen aus Alkylacrylaten mit Alkylmethacrylaten Copolymere hergestellt werden. Blockcopolymere können z.B. aus unterschiedlichen Alkylacrylaten oder unterschiedlichen Alkylmethacrylaten oder aus Alkylacrylaten und Alkylmethacrylaten erhalten werden. Nach dem erfindungsgemäßen Verfahren können sowohl Zweiblockcopolymere als auch Mehrblockcopolymere hergestellt werden. Dabei kann die Gewichtszusammensetzung der Blöcke in weiten Grenzen variieren.

Zu den geeigneten Alkylmethacrylaten zählen solche mit 1 bis 20 C-Atomen, bevorzugt 1 bis 10, insbesondere 1 bis 6 C-Atomen im Esterrest. Der Esterrest kann sowohl linear als auch verzweigt sein. Ebenso kann der Esterrest ein Cycloalkylrest sein. Bevorzugt ist er linear. Die Alkylmethacrylate können auch mit einem oder mehreren Halogenatomen substituiert sein. Als Beispiele werden genannt: Methylmethacrylat, Ethylmethacrylat, 2,2,2,-Trifluorethylmethacrylat, n-Propylmethacrylat, i-Propylmethacrylat, n-Butylmethacrylat, s-Butylmethacrylat, t-Butylmethacrylat, n-Pentylmethacrylat, i-Pentylmethacrylat, n-Hexylmethacrylat, 2-Ethylhexylmethacrylat, Cyclohexylmethacrylat, n-Octylmethacrylat, n-Decylmethacrylat, Dihydrodicyclopentadienylmethacrylat. Besonders bevorzugt wird Methylmethacrylat verwendet.

Unter den Alkylacrylaten sind C₁- bis C₂₀-Alkylacrylate bevorzugt. Besonders bevorzugt werden C₁- bis C₁₀-, insbesondere C₁- bis C₈-Alkylacrylate. Die Alkylreste können sowohl linear als auch verzweigt sein oder einen Ring bilden. Beispielsweise können Methylacrylat, Ethylacrylat, n-Propylacrylat, i-Propylacrylat, n-Butylacrylat, i-Butylacrylat, t-Butylacrylat, n-Pentylacrylat, i-Pentylacrylat, n-Hexylacrylat, 2-Ethylhexylacrylat, Cyclohexylacrylat, n-Octylacrylat, n-Decylacrylat, Dihydrodicyclopentadienylacrylat eingesetzt werden.

Unter den Blockcopolymerisaten sind solche bevorzugt, die aus Methylmethacrylat- und n-Butylacrylatblöcken, t-Butylacrylatblöcken, t-Butylmethacrylat oder 2-Ethylhexylacrylatblöcken insbesondere aus Methylmethacrylat und t-Butylmethacrylat aufgebaut sind.

Erfindungsgemäß enthält die Initiatorzusammensetzung eine alkaliorganische Verbindung oder eine Mischung unterschiedlicher derartiger alkaliorganischer Verbindungen. Als Alkalimetall sind Lithium, Natrium oder Kalium bevorzugt. Die Wahl des Alkalimetalls beeinflußt unter anderem die Reaktionsgeschwindigkeit der Polymerisationsreaktion, sodaß sich die Wahl des Metalls nach den umzusetzenden Monomeren und der gewünschten Reaktionsgeschwindigkeit richtet. Im allgemeinen werden lithiumorganische Verbindungen bevorzugt.

Bevorzugt verwendet man Alkyl- oder Alkylarylalkaliverbindungen. Deren Alkylrest weist in der Regel 1 bis 10, bevorzugt 1 bis 6 C-Atome auf und kann linear, verzweigt oder cyclisch sein. Der Alkylarylrest hat im allgemeinen 1 bis 10, bevorzugt 1 bis 6 C-Atome in der Alkylgruppe. Die Alkylgruppe ist auch durch einen oder mehrere Arylreste substituiert. Als Arylrest kommen sowohl monocyclische als auch polycyclische Arylreste in Betracht, die in der Regel 6 bis 18 C-Atome haben. Bevorzugter Arylrest ist ggf. substituiertes Phenyl. Alkylarylalkaliverbindungen sind beispielsweise durch Umsetzen von Styrol oder substituierten Styrolen wie α-Methylstyrol oder 1,1-Diphenylethern oder kernalkylierten Styrolen mit einer Alkylalkaliverbindung, beispielsweise n-Butyllithium, s-Butyllithium oder t-Butyllithium zugänglich. Anstelle von Styrol oder dessen Derivaten können auch Oligomere oder Polymere dieser Verbindungen verwendet werden. Vertreter der Alkyl- oder Alkylarylalkaliverbindungen sind beispielsweise n-Butyllithium, s-Butyllithium, t-Butyllithium, Diphenylmethyllithium, Diphenylmethylnatrium, Diphenylmethylkalium, 1,1,4,4-Tetraphenylbutan-1,4-dilithium, 1,1,4,4-Tetraphenylbutan-1,4-dinatrium, 1,1,4,4-Tetraphenylbutan-1,4-dikalium, 1-Phenylhexyllithium, 1,1-Diphenylhexyllithium, 3-Methyl-1-phenylpentyllithium, 1,3-Dimethyl-1-phenylpentyllithium oder 3-Methyl-1,1-diphenylpentyllithium.

Als spezielle alkaliorganische Verbindung kann die Initiatorzusammensetzung Alkaliesterenolat oder eine Mischung unterschiedlicher derartiger Enolate enthalten.

Die Alkalienolate können getrennt hergestellt und als solche eingesetzt werden.

Die Herstellung von Alkalienolaten ist an sich bekannt. Sie lassen sich beispielsweise dadurch herstellen, daß ein Alkalisalz, eine Alkylalkaliverbindung oder ein Alkalimetall mit einem Ester, der mindestens ein acides Proton am α-Kohlenstoffatom aufweist, umgesetzt wird. Selbstverständlich können auch Diester zu den erfindungsgemäß enthaltenen Alkaliesterenolaten umgesetzt werden. Anschließend können die so erhaltenen Alkalienolate isoliert und gereinigt werden.

Zur Herstellung der Alkalienolate sind Ester der allgemeinen Formeln II oder III bevorzugt: 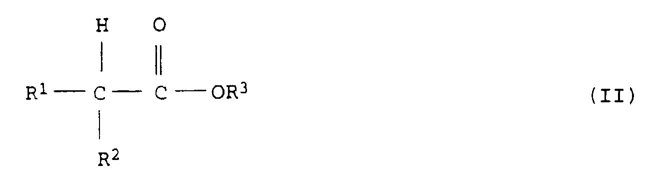 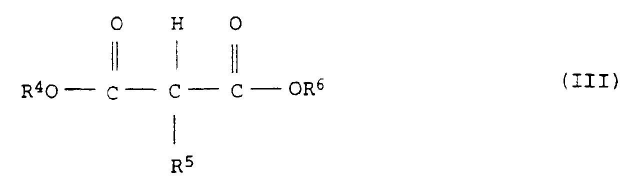 worin die Reste R¹ bis R⁶ gleich oder verschieden voneinander sein können und unabhängig voneinander einen C₁- bis C₁₀-Alkyl oder C₆-bis C₁₈-Arylrest bedeuten. Die Reste R¹, R² und R⁵ können ferner auch für Wasserstoff stehen. Die Alkylreste können sowohl linear als auch verzweigt sein. Bevorzugte Ester II oder III enthalten als Reste R³, R⁴ und R⁶ C₁- bis C₅-Alkylreste wie Methyl, Ethyl, n-Propyl, i-Propyl, n-Butyl, i-Butyl oder t-Butyl, worunter Methyl oder t-Butyl besonders bevorzugt sind. Die Reste R¹, R² und R⁵ sind bevorzugt C₁- bis C₈-Alkylreste, worunter Methyl, Ethyl, i-Butyl und 2,2-Dimethylpentyl besonders bevorzugt sind.

Aus Estern der allgemeinen Formel II ist beispielsweise Lithiummethylisobutyrat, Ethyl-α-Lithio-isobutyrat oder Lithium-t-butylisobutyrat zugänglich. Aus den Estern der allgemeinen Formel II läßt sich auch z.B. 2-Lithium-2,4,4-trimethylpentansäuremethylesterenolat herstellen. Lithiumalkylmalonate wie 2-Lithium-2-(C₁-bis C₅-alkyl)-1,3-propandicarbonsäuredialkylesterenolate, insbesondere 2-Lithium-2-ethyl-1,3-propandicarbonsäuredimethylesterenolat, können aus dem Ester der allgemeinen Formel (III) hergestellt werden.

Es können auch unterschiedliche Alkaliesterenolate eingesetzt werden, sodaß in der Starterzusammensetzung unterschiedliche Alkaliesterenolate enthalten sind.

Neben einem Alkaliesterenolat enthält die Starterzusammensetzung erfindungsgemäß eine organische Aluminiumverbindung. Daneben ist es erfindungsgemäß auch möglich unterschiedliche Aluminiumverbindungen einzusetzen. Bevorzugt werden Aluminiumalkylverbindungen. Die Alkylreste am Aluminium können gleich oder verschieden sein und enthalten im allgemeinen von 1 bis 10, bevorzugt 1 bis 6 C-Atome. Sie können linear oder verzweigt aber auch cyclisch sein. Beispielhaft können als Aluminiumverbindungen Trimethylaluminium, Triethylaluminium, Tri-i-propylaluminium, Triisobutylaluminium, Tri(neopentyl)aluminium oder Tri(norbornyl)aluminium genannt werden. Des weiteren kommen auch Aluminiumalkylalkoholate und gegebenenfalls am Phenylring alkyl- oder alkoxy-substituierte Aluminiumalkylphenolate in Betracht, wie beispielsweise Diisobutylaluminium-2,6-di-tert.-butyl-4-methyl-phenolat.

Gemäß der Erfindung enthält die Starterzusammensetzung einen Alkalikationen komplexierenden Zusatz C). Hierzu zählen beispielsweise die linearen Polyether mit 1 bis 8 C-Atome tragenden linearen oder verzweigten Alkylresten zwischen den Etherfunktionen und an den Kettenenden. Bevorzugt werden die leicht zugänglichen Dimethylether, wie Dimethoxyethan (DME) und Triethylenglykoldimethylether (Triglyme). Geeignet sind auch höhermolekulare Polyether wie Polyethylenoxid oder Polytetrahydrofuran. Eine weitere Klasse von Alkaliionen komplexierenden Verbindungen sind die makrozyclischen Polyether, auch als Kronenether bekannt, und Kryptanden. Beispiele hierfür sind
Dibenzo-18-Krone-6 (2,3,11,12-Dibenzo-1,4,7,10,13,16-Hexaoxacyclooctadeca-2,11-dien),
Poly-[dibenzo-18-Krone-6-co-formaldehyd],
Dibenzo-24-Krone-8 (2,3,14,15-Dibenzo-1,4,7,10,13,16,19,22-octaoxacyclotetracosa-2,14-dien),
Dibenzo-30-Krone-10 (2,3,17,18-Dibenzo-1,4,7,10,13,16,19,22,25, 28-decaoxacyclotriaconta-2,17-dien),
N,N'-Dibenzyl-4,13-diaza-18-Krone-6 (N,N'-Dibenzyl-1,4,10,13-tetraoxa-7,16-diazacyclooctadecan),
12-Krone-4 (1,4,7,10,-Tetraoxacyclododecan),
15-Krone-5 (1,4,7,10,13-Pentaoxacyclopentadecan),
18-Krone-6 (1,4,7,10,13,16-Hexaoxacyclooctadecan),
1-Aza-12-Krone-4,
1-Aza-15-Krone-5,
1-Aza-18-Krone-6,
Benzo-15-Krone-5,
Benzo-18-Krone-6,
Dicyclohexano-18-Krone-6 (cis-2,3,11,12-Dicyclohexano-1,4,7,10,13,16-hexaoxacyclooctadecan),
Dicyclohexano-24-Krone-8 (2,3,14,15-Dicyclohexano-1,4,7,10,13,16,19,22-octaoxacyclotetracosan),
4,10-Diaza-15-Krone-5 (1,7-Diaza-4,10,13-trioxacyclopentadecan(7,13-1,4,10) ≙ [2,1]Kryptand,
4,13-Diaza-18-Krone-6 (1,10-Diaza-4,7,13,16-tetraoxacyclooctadecan(7,16-1,4,10,13),
1,10-Diaza-4,7,13,16,21,24-hexaoxabicyclo[8.8.8]hexacosan) ≙ [2.2.2] Kryptand,
1,10-Diaza-4,7,13,16,21-pentaoxabicyclo[8.8.5]tricosan ≙ [2.2.1] Kryptand,
1,10-Diaza-4,7,13,18-tetraoxabicyclo[8.5.5]eicosan ≙ [2.1.1] Kryptand,
5,6-Benzo-4,7,13,16,21,24-hexaoxa-1,10-diazabicyclo[8.8.8]hexacosan, [2.2.2] Kryptand B
1,4,7,10,13,16-hexaoxacyclooctadecane.

Die Auswahl des geeigneten makrozyklischen Polyethers richtet sich nach dem Ionenradius des verwendeten Alkalikations und ist allgemein bekannt. Für die bevorzugte Verwendung von Lithium als alkaliorganische Verbindung A) wählt man beispielsweise 12-Krone-4 oder [2.1.1] Kryptand aus.

Als weitere erfindungsgemäße Zusätze C) kommen quartäre Kationen der allgemeinen Formel I 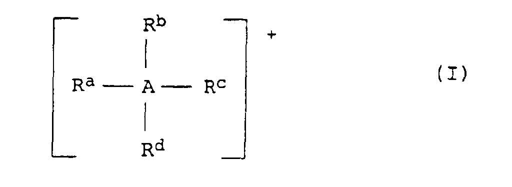 in der
A N, P, As, Sb, und
R^{a}, R^{b}, R^{c}, R^{d}
unabhängig voneinander gegebenenfalls substituiertes Alkyl, Cycloalkyl, Aralkyl oder Aryl bedeuten, wobei zwei benachbarte Reste zusammen mit dem Heteroatom A einen 5 oder 6-gliedrigen Heterozyclus bilden können, der ein oder zwei weitere Heteroatome, ausgewählt aus Stickstoff-, Sauerstoff- oder Schwefelatomen, enthalten kann, in Betracht.

Als Vertreter der erfindungsgemäßen Komponente C) gemäß Formel I seien beispielsweise genannt: Tetramethylammonium-, Tetraethylammonium-, Trimethylbenzylammonium- Trimethyldodecylammonium-, Tetrabutylammonium-, Dimethylpiperidinium-, Dimethylmorpholinium-, Trimethylanilinium-, 1,1-Dicyanoethyltetrabutylammonium-. Besonders bevorzugt werden wegen ihrer einfachen Zugänglichkeit Tetraalkylammoniumionen wie Tetramethyl-, Tetraethyl-, Tetrabutyl-ammonium- sowie Tetraphenylphosphonium-, Tetraphenylarsonium-, und Tetraphenylstibonium-ionen. Die genannten Kationen werden üblicherweise in Form ihrer Salze anorganischer Säuren z.B. als Halogenide, Pseudohalogenide, Chlorate, Perchlorate, Nitrate, Sulfonate, Trifluormethansulfonate, Tetrafluoroborate, Tetraphenylborate, Hexafluorphosphate, Hexafluorantimonate, Hexafluorstilbate oder organischen Säuren mit einem pKₛ-Wert kleiner dem von Wasser, z.B. als Acetate oder Benzoate eingesetzt. Besonders bevorzugt werden sie als Halogenide, insbesondere Chloride, Bromide oder Jodide oder in Form der Cyanide oder Rhodanide verwendet.

Je nach gewünschtem Polymerisationsergebnis oder gewünschten Polymerisationsparametern wie Geschwindikeit der Reaktion kann die Zusammensetzung des Starters in weiten Grenzen variieren. Im allgemeinen enthält die Starterzusammensetzung die Aluminiumalkylverbindung zur alkaliorganische Verbindung im Molverhältnis 0,5 : 1 bis 10 : 1, bevorzugt von 1:1 bis 5:1, den Zusatz C) zur alkaliorganischen Verbindung im Molverhältnis 0,5:1 bis 1000:1, bevorzugt von 1:1 bis 200:1.

In der Regel wird das molare Verhältnis von Monomer zu alkaliorganischer Verbindung im Bereich von 5 : 1 bis 10000 : 1 gewählt. Bevorzugte molare Verhältnisse von alkaliorganischer Verbindung zu Monomer liegen im Bereich von 10 : 1 bis 5000 : 1, insbesondere von 50 : 1 bis 3000 : 1.

Die Polymerisation kann sowohl in Abwesenheit als auch in Gegenwart eines Lösungsmittels ausgeführt werden. Im allgemeinen wird die Polymerisation in einem Lösungsmittel ausgeführt. Bevorzugt werden unpolare Lösungsmittel verwendet. Hierzu zählen aromatische Kohlenwasserstoffe wie Toluol, Benzol, Xylol oder Ethylbenzol. Es können aber auch Mischungen unterschiedlicher unpolarer Lösungsmittel wie Mischungen aus Toluol mit Ethylbenzol oder Mischungen aromatischer und aliphatischer Kohlenwasserstoffe, z.B. Cyclohexan, Hexan oder Pentan verwendet werden. Bevorzugtes Lösungsmittel ist Toluol oder Ethylbenzol. Vorzugsweise werden Lösungsmittel eingesetzt, die die verfahrenstypisch erforderliche hohe Reinheit aufweisen.

Wenn in Gegenwart eines Lösungsmittels polymerisiert wird, kann die Umsetzung der Monomeren bei unterschiedlichen Verdünnungsgraden durchgeführt werden. Beispielsweise kann der Gewichtsanteil der Monomeren im Gesamtansatz im Bereich von 0,5 bis 80 %, bevorzugt von 1 bis 50 % betragen.

Prinzipiell können die Komponenten der Starterzusammensetzung, das Lösungsmittel und die Monomeren in unterschiedlichster Reihenfolge miteinander gemischt werden. Beispielsweise können alle Starterkomponenten vorgelegt werden und Lösungsmittel und Monomerzugabe anschließend erfolgen. Es können aber auch einige der Starterkomponenten zunächst eingesetzt werden und einige andere Starterkomponenten später zugegeben werden. Auch ist es möglich, während der Polymerisationsreaktion weitere Mengen an Starterzusammensetzung zuzugeben. Vorzugsweise jedoch wird das Lösungsmittel vorgelegt und zunächst mit der Aluminiumverbindung versetzt. Zu dieser Mischung kann dann das Alkalienolat, das getrennt hergestellt wurde, gegeben werden. Alternativ kann, wie bereits oben beschrieben, eine Alkyl- oder Alkylarylalkaliverbindung zugesetzt und anschließend durch Umsetzten mit einer stöchiometrischen Menge eines Alkylmethacrylates, vorzugsweise des bei der Polymerisation verwendeten Monomeren, in situ in das Alkalienolat überführt werden. Im allgemeinen wird danach der Alkaliionen komplexierende Zusatz und dann das Monomer zugegeben. Die einzelnen Komponenten der Starterzusammensetzung können dabei als solche eingesetzt werden. Ebenso ist es möglich, die Komponenten der Starterzusammensetzung gelöst oder dispergiert in einem der genannten Lösungsmittel oder Lösungsmittelmischungen einzusetzen. Bevorzugt werden die Komponenten jeweils gelöst in Pentan, Hexan, Toluol, Ethylbenzol oder Cyclohexan verwendet. Es kommt in Betracht, die gesamte Monomerenmenge auf einmal, stufenweise oder kontinuierlich zuzugeben.

Die Umsetzung kann beispielsweise bei einer Temperatur im Bereich von -78 bis +50°C durchgeführt werden. Bevorzugt wird ein Temperaturbereich von -30 bis +30°C, insbesondere von -20 bis 0°C. Während der Umsetzung kann die Temperatur entweder nahezu konstant gehalten werden oder die Umsetzung kann einem Temperaturprogramm unterworfen werden.

Nach erfolgtem Molekulargewichtsaufbau wird die Polymerisationsreaktion in der Regel durch Zugabe einer protischen Substanz, wie z.B. einem Alkohol wie Methanol oder Ethanol oder Essigsäure, Ameisensäure, Salzsäure oder Wasser oder einer Mischung dieser Verbindungen abgebrochen.

Das Reaktionsgemisch kann dann beispielsweise nach an sich bekannten Methoden aufgearbeitet werden. So kann das erhaltene Poly(meth)acrylat beispielsweise mittels eines niederen Alkohols oder Wasser ausgefällt werden oder das Lösungsmittel aus der Reaktionsmischung entfernt werden.

Die nach dem erfindungsgemäßen Verfahren erhältlichen Poly(meth)acrylate, bevorzugt Polymethylmethacrylate, weisen im allgemeinen Molekulargewichte (Zahlenmittelwerte Mₙ) im Bereich von 5000 bis 1000000, bevorzugt im Bereich von 5000 bis 300000 g/mol auf. Da nach dem erfindungsgemäßen Verfahren Gelbildung nicht bzw. nur in untergeordnetem Maße auftritt, haben sie eine enge Molekulargewichtsverteilung, angegeben als Verhältnis von Gewichtsmittel zu Zahlenmittel M_{w}/Mₙ. In der Regel liegt M_{w}/Mₙ im Bereich von 1,05 bis 1,6, bevorzugt im Bereich von 1,05 bis 1,4. Außerdem werden nach dem erfindungsgemäßen Verfahren Poly(meth)acrylate hoher Syndiotaktizität erhalten. Der Anteil der syndiotaktischen Triaden rr beträgt im allgemeinen von 50 bis 85, bevorzugt von 60 bis 80 %.

Das erfindungsgemäße Verfahren zeichnet sich zum einen dadurch aus, daß die Prozeßparameter wie Reaktionsgeschwindigkeit und Temperatur gut kontrolliert werden können. Zum anderen können vollständige oder nahezu vollständige Umsätze erreicht werden. Außerdem ist das Verfahren wesentlich weniger empfindlich gegen Verunreinigungen, die in den Lösungsmitteln und Monomeren technischer Qualität vorhanden sind, als bekannte Verfahren.

Außerdem lassen sich mit dem erfindungsgemäßen Verfahren Blockcopolymere herstellen. Hierzu bricht man die Polymerisationsreaktion nach erfolgtem Molekulargewichtsaubbau nicht mit protischen Subtanzen ab, sondern gibt weitere, von der ersten Zugabe verschiedene Monomere oder Monomermischungen zu. Auf diese Weise lassen sich auch mehrere Blöcke anhängen.

### Beispiele:

Die Beispiele wurden unter Ausschluß von Sauerstoff und Feuchtigkeit in der üblichen Schutzgastechnik durchgeführt.

Die zahlen- und gewichtsmittleren Molekulargewichte Mn und Mw wurden mittels Gelpermeationschromatographie, sofern nicht anders angegeben, unter Verwendung von Polymethylmetacrylatstandards bestimmt.

Die Taktizität der erhaltenen Poly(meth)acrylate wurde mittels ¹H-NMR-Spektroskopie bestimmt.

Herstellung und Reinigung der Ausgangsverbindungen:

Ethyl-α-lithioisobutyrat (EiBLi) wurde aus Isobuttersäureethylester und Lithiumisopropylamid in Hexan hergestellt und aus Diethylether umkristallisiert.

Trimethylaluminium (AlMe₃) wurde als 2 M-Lösung in Toluol, Triethylaluminium (AlEt₃) als 25%ige Lösung in Toluol, Triisobutylaluminium (AliBu₃) als 1,0 M-Lösung in Toluol von der Firma Aldrich bezogen.

tert.-Butyllithium (t-BuLi)wurde als 1.5 M Lösung in Pentan eingesetzt.

1,4,7,10,-Tetraoxacyclododecan (12-Krone-4) von der Fa Aldrich wurde über CaH₂ gerührt und filtriert.

Das verwendete Toluol wurde über Na/K-Legierung gerührt und destilliert.

Die monomeren Acrylate wurden mittels Stickstoffspülung, Alumniumoxid und Calciumhydrid gereinigt und anschließend im Vakuum destilliert.

Ethylbenzol wurde über Aluminiumoxid gereinigt.

### Beispiel 1

In das auf 0°C gekühlte Reaktionsgefäß wurden unter Rühren 0,7 mmol Triethylaluminium (AlEt₃) in Toluol, 28 mg (0,23 mmol) Ethyl α-lithioisobutyrat (EiBLi) in Toluol gegeben und in rascher Folge 50 mg (0,28 mmol) 1,4,7,10-Tetraoxacyclododecan (12-Krone-4) in Toluol und 11,5 mmol Methylmethacrylat in Toluol zugegeben. Die Menge an Toluol wurde so bemessen, daß das Gesamtvolumen der Reaktionslösung 50 ml betrug. Nach 5 Minuten wurde die Reaktion durch Zugabe von 5 ml eines Methanol/Eisessig-Gemisches (9:1) abgebrochen und die Lösemittel im Vakuum entfernt. Das entstandene Polymer wurde in Benzol aufgenommen, filtriert und gefriergetrocknet. Die Eigenschaften des Polymeren sind in Tabelle 1 zusammengestellt.

### Beispiele 2 bis 7

Beispiel 1 wurde mit den in Tabelle 1 aufgeführten Versuchsbedingungen und Einsatzstoffen wiederholt. In Beispiel 5 wurde das Reaktionsgefäß auf -78°C vorgekühlt. In den Beispielen 6 und 7 wurde n-Butylacrylat (nBA) als Monomer eingesetzt.

### Vergleichsversuch V1

Das Beispiel 1 wurde ohne Triethylaluminium unter Einhaltung der in Tabelle 1 aufgeführten Versuchsparameter wiederholt.

### Vergleichsversuch V2

Das Beispiel 1 wurde ohne den Kronenether und mit Diisobutylaluminium-2,6-di-tert.-butyl-4-methyl-phenolat (iBu)₂Al(BHT)unter Einhaltung der in Tabelle 1 aufgeführten Versuchsparameter wiederholt.

### Beispiele 8 und 9

Zur Herstellung von Blockcopolymerern P(MMA-b-nBA) wurde zunächst ein Polymethylmethacrylatblock wie in Beispiel 1 beschrieben hergestellt, ohne jedoch die Reaktion mit dem Methanol/Eisessig-Gemisch abzubrechen. Zur Charakterisierung wurde eine kleine Probe entnommen. Anschließend wurde schnell auf die Temperatur für die Polymerisation des Butylacrylatblockes abgekühlt und rasch 12,5 mmol n-Butylacrylat (nBA) zu der Reaktionslösung gegeben. Anschließend wird die Reaktion wie in Beispiel 1 beschrieben abgebrochen und aufgearbeitet. Die Versuchsparameter für die Blockcopolymerisation sind der Tabelle 1 zu entnehmen.

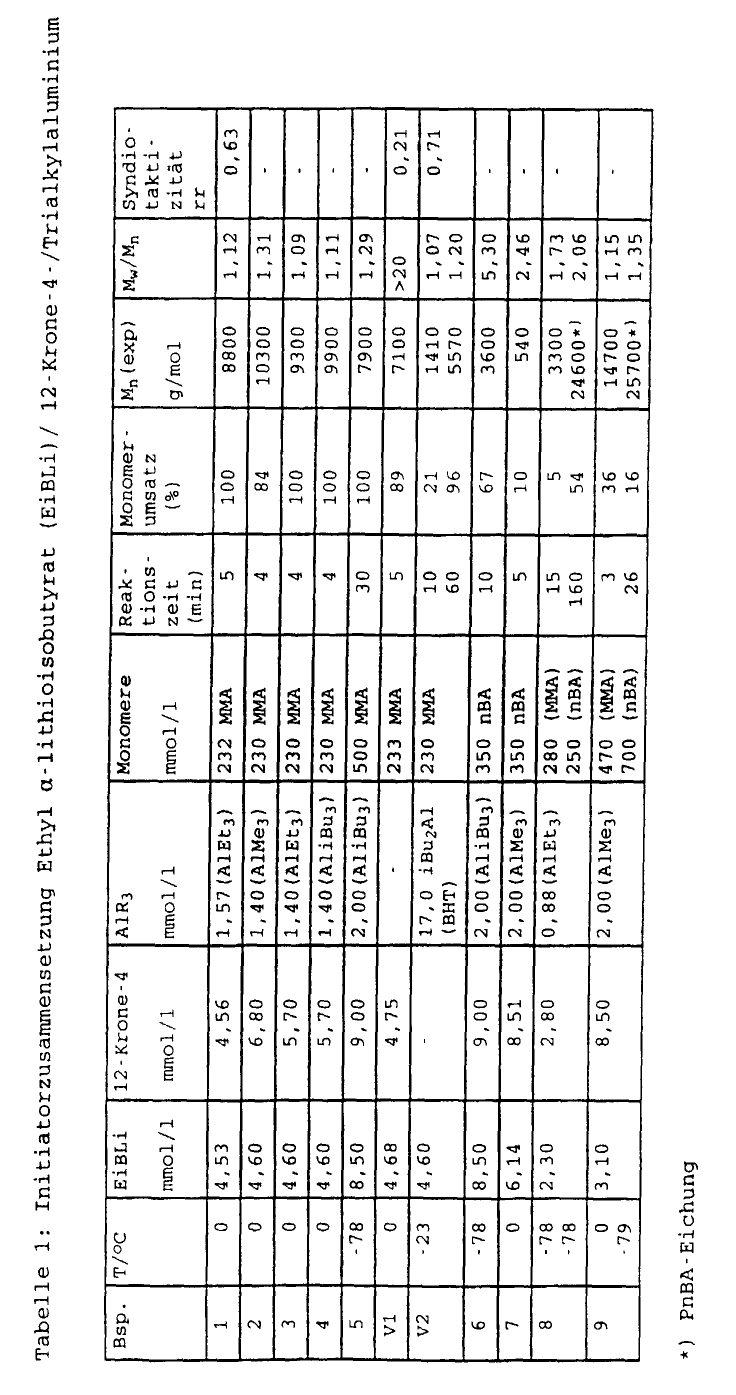

### Beispiel 10

Eine bei 25°C unter Stickstoffatmosphäre frisch hergestellte homogene Lösung aus 1,57 mmol Triethylaluminium (AlEt₃) und 222 mg (0,69 mmol) Tetra-n-butylammoniumbromid (NBu₄Br) in 10 ml Toluol wurde zu einer auf 0°C gekühlten Lösung von 57,3 mg (0,049 mmol) Ethyl-α-lithioisobutyrat (EiBLi) in 90 ml Toluol gegeben und 5 Minuten gerührt. Zu der so hergestellten Startermischung gibt man bei 0°C schnell (innerhalb ca. 1 Sekunde) 2,33 g (23,3 mmol) Methylmethacrylat (MMA). Nach 5 Minuten wurde die Reaktion durch Zugabe von 5 ml Methanol abgebrochen und die Lösemittel im Vakuum entfernt. Das entstandene Polymere wurde in Benzol aufgenommen, filtriert und gefriergetrocknet.

### Beispiele 11 bis 25

Beispiel 10 wurde mit den in Tabelle 2a zusammengestellten Mengenkonzentrationen wiederholt.

### Vergleichsversuch V3

Es wurde wie in Beispiel 10 verfahren, mit dem Unterschied, daß kein Triethylaluminium verwendet wurde.

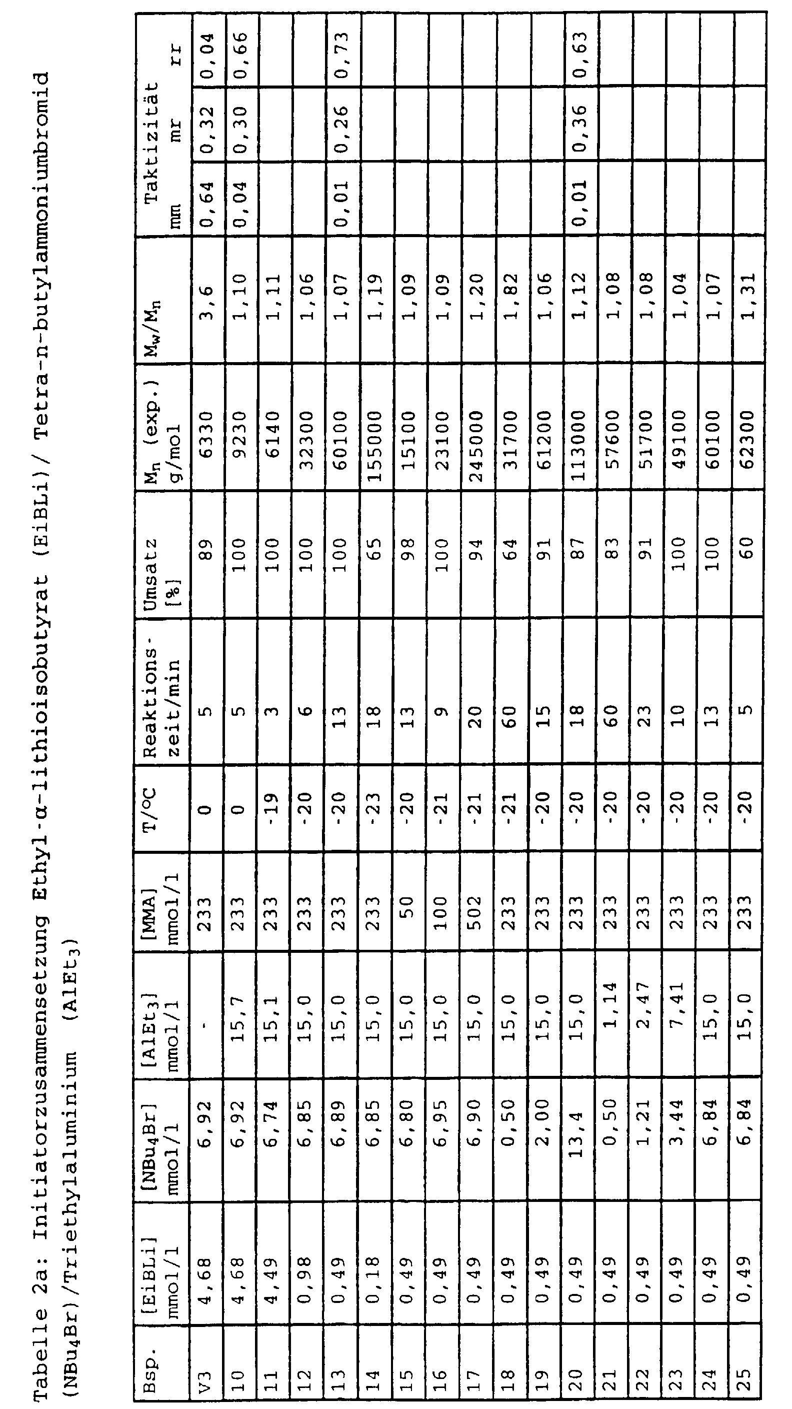

### Beispiel 26 bis 28

Beispiel 10 wurde unter Verwendung von Tetramethylammoniumchlorid (NMe₄Cl) und 2-Ethylhexylacrylat (EHA) bzw. tert. Butylacrylat (tBA) oder n-Butylacrylat (nBA) mit den in Tabelle 2b zusammengestellten Mengenverhältnissen und Ergebnissen wiederholt.

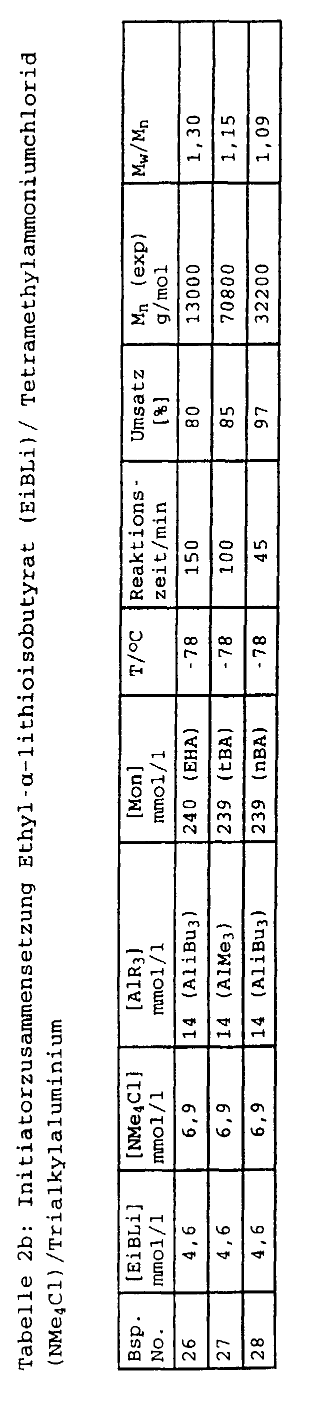

### Beispiel 29 bis 30

Beispiel 10 wurde unter Verwendung von Tetramethylammoniumchlorid bzw. Tetraphenylphosphoniumchlorid anstelle von Tetra-n-butylammoniumbromid mit den in Tabelle 2c genannten Mengenkonzentrationen und Versuchsparametern wiederholt.

**Tabelle 2c:**

| Initiatorzusammensetzung Ethyl-α-lithioisobutyrat (EiBLi)/ Tetra-n-methylammonium-(NMe₄Cl), bzw Tetraphenylphosphoniumchlorid (PPh₄Cl)/Triethylaluminium (AlEt₃) | | |
|---|---|---|
| | Beispiel 29 | Beispiel 30 |
| [EiBLi] mmol/l | 0,49 | 0,49 |
| [MX] mmol/l | 6,84 (NMe₄Cl) | 6,83 (PPh₄Cl) |
| [AlEt₃] mmol/l | 15,0 | 15,0 |
| [MMA] mmol/l | 233 | 233 |
| T/°C | -20 | -20 |
| Reaktionszeit/min | 40 | 18 |
| Umsatz/% | 95 | 77 |
| Mₙ (exp) g/mol | 75800 | 167000 |
| M_{w}/Mₙ | 1,17 | 1,63 |
| Taktizität mm | 0,01 | |
| Taktizität mr | 0,25 | |
| Taktizität rr | 0,74 | |

### Beispiel 31 und 32

Unter Beachtung der in Tabelle 2d genannten Versuchsparametern wurde nach Beispiel 10 verfahren, wobei als Monomer t-Butylmethacrylat anstelle von Methylmethacrylat verwendet wurde.

**Tabelle 2d:**

| Initiatorzusammensetzung Ethyl-α-lithioisobutyrat (EiBLi)/ Tetra-n-butylammoniumbromid (NBu₄Br)/Triethylaluminium (AlEt₃) | | |
|---|---|---|
| | Beispiel 31 | Beispiel 32 |
| [EiBLi] mmol/l | 0,49 | 4,57 |
| [NBu₄Br] mmol/l | 6,85 | 6,92 |
| [AlEt₃] mmol/l | 15,0 | 15,3 |
| [tBMA] mmol/l | 232 | 426 |
| T/°C | -20 | 0 |
| Reaktionszeit/min | 25 | 5 |
| Umsatz/% | 98 | 100 |
| Mₙ (exp) g/mol | 152000 | 31100 |
| M_{w}/Mₙ | 1,12 | 1,10 |

### Beispiel 33

In das Reaktionsgefäß wurden zu 105 ml Ethylbenzol bei 0°C unter Rühren 4,85 mmol Triethylaluminium (AlEt₃) in Toluol (2,6 ml einer 1,9 M Lösung)und 0,9 ml (1,35 mmol) einer 1.5 M tert.-Butyllithiumlösung in n-Pentan gegeben. Nach 10 Minuten Rühren wurden 5 ml einer Lösung von 1,65 mmol Methylmethacrylat in Ethylbenzol langsam zugegeben und weitere 15 Minuten bei 0°C gerührt, wobei eine gelbe Reaktionslösung entstand. Anschließend fügte man eine bei 25°C frisch bereitete Lösung von 0,49 mmol Triethylaluminium in Toluol (1,9 M) und 4,4 ml (24,3 mmol) Triethylenglykoldimethylether hinzu. Nach 3 Minuten wurden zu dieser Starterlösung bei -1°C 7,5 ml (70,5 mmol) Methylmethacrylat, das zuvor mit 0,3 ml der 1,9 M Triethylaluminiumlösung in Toluol versetzt war, zugegeben und 1 Stunde bei einer Kühlbadtemperatur von 0°C polymerisiert, wobei die Massetemperatur kurzfristig 16°C erreichte. Anschließend wurde die Polymerisation durch Zugabe von 2 ml sauerstoffreiem Methanol abgebrochen und das entstandene Polymere mit salzsaurem Methanol gefällt, filtriert und im Vakuum getrocknet.

### Beispiel 34 und 35

Beispiel 32 wurde mit Triisobutylaluminium anstelle von Triethylaluminium bei 0°C und -10°C wiederholt. Die Ergebnisse sind in Tabelle 3 zusammengefaßt.

### Beispiel 36

Beispiel 33 wurde mit Dimethoxyethan (DME) und den in Tabelle 3 zusammengestellten Versuchsparametern wiederholt.

### Vergleichsversuche V4 bis V6

Es wurde nach Beispiel 10 verfahren, wobei tert.-Butyllithium anstelle von Ethyl-α-lithiobutyrat und Triethylaluminium, Tri-iso-Butylaluminium bzw.Diisobutylaluminium-2,6-di-tert.-butyl-4-methyl-phenolat(iBu₂Al(BHT)) ohne weitere Zusätze C) eingesetzt wurden. Die Ergebnisse sind in Tabelle 3 zusammengestellt.

### Beispiel 37

Zur Herstellung eines Blockcopolymeren P(MMA-b-tBA)wurde zunächst nach Beispiel 1 bei einer Kühlflüssigkeitstemperatur von -10°C Methylmethacrylat polymerisiert. Nachdem die Massetemperatur wieder auf -10°C gesunken war (ca. 10 Minuten) wurden die Reaktionslösung mit 51 mmol tert-Butylacrylat versetzt. Nachdem die Temperatur nach einem kurzfiristigen Anstieg auf 11°C wieder auf -10°C zurückgegangen war, wurde die Reaktion mit 5 ml eines Methanol/Essigsäuregemisches (9/1) abgebrochen und das entstandenen Blockcopolymere mit salzsaurem Methanol gefällt.

| | |
|---|---|
| Ausbeute | 97% |
| Mₙ | 34 900 g/mol |
| M_{w}/Mₙ | 1,47 |

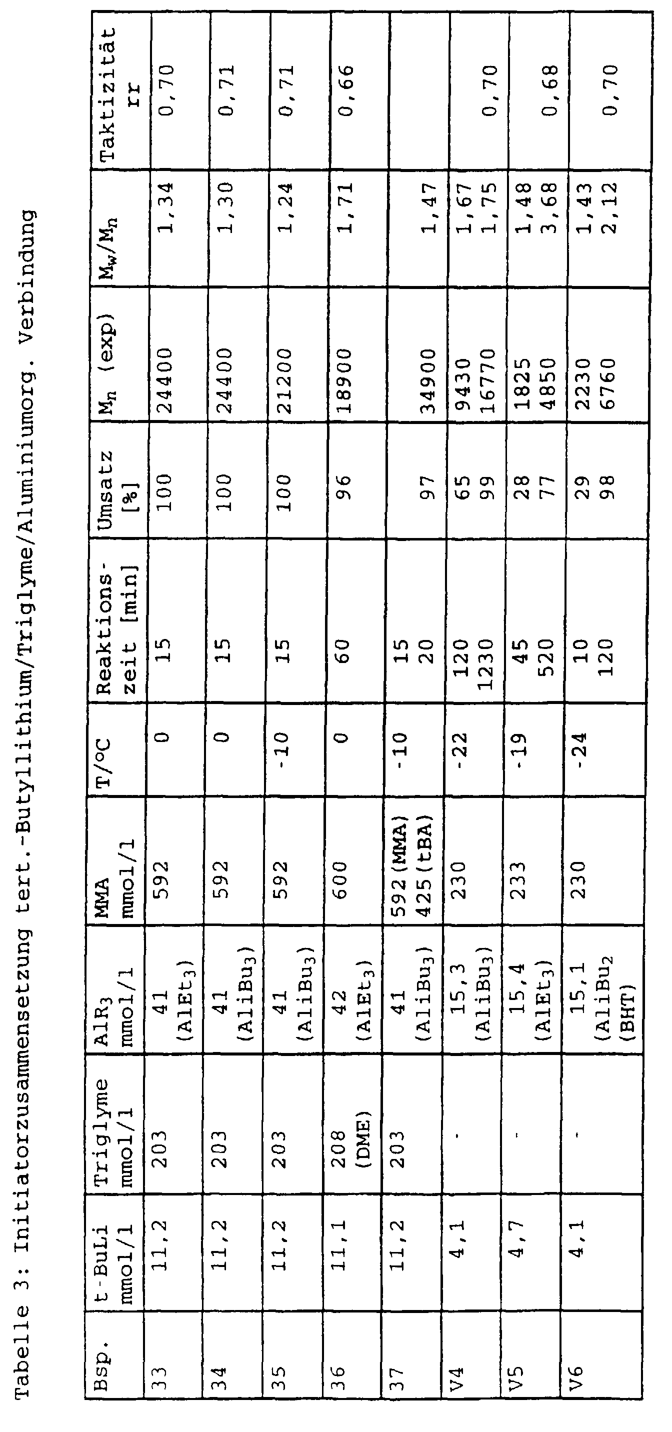

## Patentansprüche

1. Verfahren zur Herstellung von Homo-, Co- oder Blockcopolymeren durch anionische Polymerisation von Acrylaten und/oder Methacrylaten in Gegenwart einer Initiatorzusammensetzung, dadurch gekennzeichnet, daß die Initiatorzusammensetzung enthält
A) eine alkaliorganische Verbindung,
B) eine organische Aluminiumverbindung und
C) einen das Alkalikation komplexierenden Zusatz, ausgewählt aus der Gruppe offenkettiger Ether mit mindestens zwei Sauerstoffatomen in Etherfunktion, makrocyclischer Ether oder Kryptanden, oder aus der Gruppe von Salzen quartärer Kationen der allgemeinen Formel I 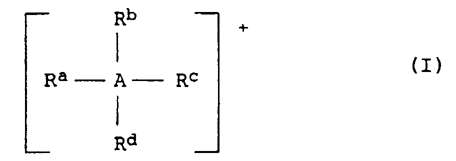 in der
A N, P, As, Sb, und
R^{a}, R^{b}, R^{c}, R^{d}
unabhängig voneinander gegebenenfalls substituiertes Alkyl, Cycloalkyl, Aralkyl oder Aryl bedeuten, wobei zwei benachbarte Reste zusammen mit dem Heteroatom A einen 5 oder 6-gliedrigen Heterozyclus bilden können, der ein oder zwei weitere Heteroatome, ausgewählt aus Stickstoff-, Sauerstoff- oder Schwefelatomen, enthalten kann.

2. Verfahren nach Anspruch 1, dadurch gekennzeichnet, daß man als alkaliorganische Verbindung A) ein Alkaliesterenolat verwendet.

3. Verfahren nach Anspruch 1, dadurch gekennzeichnet, daß man als alkaliorganische Verbindung A) eine Lithium-organische Verbindung verwendet.

4. Verfahren nach den Ansprüchen 1 bis 3, dadurch gekennzeichnet, daß man als organische Aluminiumverbindung B) eine Alkylaluminiumverbindung verwendet.

5. Verfahren nach den Ansprüchen 1 bis 4, dadurch gekennzeichnet, daß man als komplexierenden Zusatz C) Dimethoxyethan, Triethylenglykoldimethylether, 12-Krone-4 oder [2.1.1] Kryptand verwendet.

6. Verfahren nach den Ansprüchen 1 bis 4, dadurch gekennzeichnet, daß man als Zusatz C) Tetramethylammonium-, Tetra-n-butylammonium-, Tetraethylammonium- oder Tetraphenylphosphonium-halogenide einsetzt.

7. Verfahren nach den Ansprüchen 1 bis 6, dadurch gekennzeichnet, daß man die Polymerisationsreaktion in einem unpolaren Lösungsmittel durchführt.

8. Initiatorzusammensetzung, enthaltend die Komponenten A), B) und C) gemäß den Ansprüchen 1 bis 6.

9. Verfahren zur Herstellung einer Initiatorzusammensetzung gemäß Anspruch 8, dadurch gekennzeichnet, daß man in einem ersten Schritt eine Alkyl- oder Alkylarylalkaliverbindung mit einer Aluminiumalkylverbindung mischt, in einem zweiten Schritt eine zur Alkaliverbindung stöchiometrische Menge eines Alkyl(meth)acrylates zugibt und in einem dritten Schritt den Alkalikationen komplexierenden Zusatz C) gemäß Anspruch 1 zufügt.

10. Verwendung der Initiatorzusammensetzung gemäß Anspruch 8 zur Homo-, Co- oder Blockcopolymerisation von Acrylaten und/oder Methacrylaten.

## Claims

1. A process for the preparation of homopolymers, copolymers or block copolymers by anionic polymerization of acrylates or methacrylates in the presence of an initiator composition, wherein the initiator composition contains
A) an organic alkali metal compound,
B) an organic aluminum compound and
C) an additive which forms a complex with the alkali metal cation and is selected from the group consisting of open-chain ethers having at least two ether oxygen atoms, macrocyclic ethers and cryptands, or from the group consisting of salts of quaternary cations of the formula I 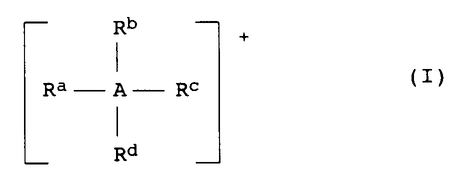 where
A is N, P, As or Sb and
R^{a}, R^{b}, R^{c} and R^{d},
independently of one another, are each unsubstituted or substituted alkyl, cycloalkyl, aralkyl or aryl, where two neighboring radicals, together with the heteroatom A, may form a 5- or 6-membered heterocyclic structure which may contain one or two further heteroatoms selected from nitrogen, oxygen and sulfur atoms.

2. A process as claimed in claim 1, wherein the organic alkali metal compound A) used is an alkali metal ester enolate.

3. A process as claimed in claim 1, wherein the organic alkali metal compound A) used is an organolithium compound.

4. A process as claimed in any of claims 1 to 3, wherein the organic aluminum compound B) used is an alkylaluminum compound.

5. A process as claimed in any of claims 1 to 4, wherein the complexing additive C) used is dimethoxyethane, triethylene glycol dimethyl ether, 12-crown-4 or [2.1.1] cryptand.

6. A process as claimed in any of claims 1 to 4, wherein the additive C) used is a tetramethylammonium, tetra-n-butylammonium, tetraethylammonium or tetraphenylphosphonium halide.

7. A process as claimed in any of claims 1 to 6, wherein the polymerization is carried out in a nonpolar solvent.

8. An initiator composition containing the components A), B) and C) as claimed in any of claims 1 to 6.

9. A process for the preparation of an initiator composition as claimed in claim 8, wherein an alkyl- or alkylaryl-alkali metal compound is mixed with an alkylaluminum compound in a first step, a stoichiometric amount of an alkyl (meth)acrylate relative to the alkali metal compound is added in a second step and the additive C) as claimed in claim 1, which forms complexes with alkali metal cations, is added in a third step.

10. The use of an initiator composition as claimed in claim 8 for the homopolymerization, copolymerization or block copolymerization of acrylates or methacrylates.

## Revendications

1. Procédé de préparation d'homopolymères, copolymères ou copolymères blocs par polymérisation anionique d'acrylates et/ou de méthacrylates en présence d'une composition initiatrice, caractérisé en ce que la composition initiatrice contient
A) un composé organique de métal alcalin,
B) un composé organique d'aluminium et
C) un additif complexant le cation alcalin, choisi dans le groupe formé par des éthers à chaîne ouverte comportant au moins deux atomes d'oxygène dans la fonction éther, des cryptands ou des éthers macrocycliques, ou dans le groupe formé par des sels de cations quaternaires de la formule générale I 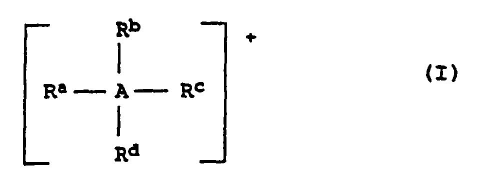 dans laquelle
A représente N, P, As, Sb, et
R^{a}, R^{b}, R^{c}, et R^{d}
Représentent, indépendamment les uns des autres, des radicaux alkyle, cycloalkyle, aralkyle ou aryle éventuellement substitués, où deux restes voisins peuvent former ensemble avec l'hétéroatome A un hétérocycle pentagonal ou hexagonal, qui peut contenir un ou deux autres hétéroatomes, choisis dans le groupe formé par des atomes d'azote, d'oxygène ou de soufre.

2. Procédé selon la revendication 1, caractérisé en ce que l'on utilise comme comporté organique de métal alcalin A) un esterénolate de métal alcalin.

3. Procédé selon la revendication 1, caractérisé en ce que l'on utilise comme composé organique de métal alcalin A) un composé organique de lithium.

4. Procédé selon les revendications 1 à 3, caractérisé en ce que l'on utilise comme composé organique d'aluminium B) un composé d'alkylaluminium.

5. Procédé selon les revendications 1 à 4, caractérisé en ce que l'on utilise comme additif complexant C) du diméthoxyéthane, du diméthyléther de triéthylène glycol, du 12-couronne-4 ou un [2.1.1] cryptand.

6. Procédé selon les revendications 1 à 4, caractérisé en ce que l'on met en oeuvre, comme additif C), un halogénure de tétraméthylammonium, de tétra-n-butylammonium, de tétraéthylammonium ou de tétraphénylphosphonium.

7. Procédé selon les revendications 1 à 6, caractérisé en ce que l'on entreprend la réaction de polymérisation dans un solvant non polaire.

8. Composition initiatrice, contenant les composants A), B) et C) selon les revendications 1 à 6.

9. Procédé de préparation d'une composition initiatrice selon la revendication 8, caractérisé en ce que, dans une première étape, on mélange un composé alkylique ou arylalkylique de métal alcalin avec un composé d'alkylaluminium, en une deuxième étape on ajoute un (méth)acrylate d'alkyle en quantité stoechiométrique par rapport au composé de métal alcalin et, en une troisième étape, on ajoute l'additifs C) complexant l'ion de métal alcalin selon la revendication 1.

10. Utilisation de la composition d'initiateur selon la revendication 8 pour la production d'homopolymères, de copolymères ou de copolymères blocs d'acrylates et/ou de méthacrylates.
